# EUROPEAN PATENT APPLICATION

(11) **EP 1 776 867 A2**
(43) Date of publication of application: **25.04.2007**
(21) Application number: 06122438.2
(22) Date of filing: 17.10.2006
(51) Int. Cl.: A21C 9/00, F26B 21/02, F26B 21/06, F26B 15/20

(54) **integrated air flow drying apparatus and method**

(30) Priority: 21.10.2005 IT MI20052010
(71) Applicant: Fava S.p.A., 44042 Cento FE (IT)
(72) Inventor: FAVA, Enrico, 44042, CENTO (Ferrara) (IT)
(74) Representative: De Gregori, Antonella

(57) **Abstract**

An integrated air flow and energy saving drying apparatus for pasta of the type comprising a predrying section (A), an actual drying section (B) and a stabilization section (C), arranged in a single containment structure (12) connected to each other by single air circulation, effected by at least one fan (14), at least one radiating battery (13) situated in an air feeding duct (19, 20) between the predrying section (A) and the actual drying section (B) and at least one control probe (17, 18) of the air conditions associated with the predrying section (A).

## Description

The present invention relates to an integrated air flow drying apparatus for pasta.

In the field of treatment lines of pasta necessary for its preservation and distribution, current short pasta dryers are characterized in that they consist of several units divided by the various types of treatment required by the pasta during the drying cycle.

Currently, in fact, after extrusion of the pasta, the product thus obtained is treated in a first apparatus for a few minutes. The treatment takes place at extremely high temperatures with very dry air to remove an important quantity of surface water (5-6 points). This ensures, thanks to the hardening of the surface, the regularity of the formats (otherwise, maccheroni in particular would tend to become squashed and stick to each other).

This first apparatus, which is called a "seed sieve", is situated under the extrusion press.

At the end of this first phase, the pasta begins the actual drying phase which in turn is divided into three phases: predrying, drying and stabilization.

According to known standards used so far, the predrying phase which requires much drier and hotter air with respect to the drying phase, is effected in a separate apparatus or section. In this apparatus, the air conditions are managed by a specific regulation which extracts and expels about 8-10 points of water from the residual 25 after the seed sieve.

After this predrying phase, which approximately lasts about 45 minutes, the pasta is subjected to subsequent actual drying phases and stabilization.

These two phases are presently effected in a single unit or apparatus separate from the previous apparatus where the predrying phase is effected.

Here also, a distinct regulation which drives a specific hydraulic plant, generates thermohygrometric conditions capable of bringing the pasta in a time of 1 hour and 40 minutes to the final humidity of 12%, uniformly distributed thanks to a stabilization area in the same environment, but protected from the air flow to make it static. This lasts at least 1 hour.

The complete cycle therefore proposes the use of a series of specific air flows, effected in the single phases, i.e. in the single apparatuses.

A similar situation has articulated structures and regulations which, especially for medium and small production lines are extremely costly.

The limited quantity of product of these units makes the use of high temperatures complex.

In short, the whole cycle has a higher cost per kg of product with respect to higher potentiality lines.

Unlike large lines, in fact, which use a high temperature drying technology, said technology cannot be applied with the same simplicity to medium and small production lines. It is therefore necessary, for example, to resort to creating useful conditions with compromises, such as the use of humidifiers, also steam humidifiers, with consequent complications.

An objective of the present invention is therefore to find a different solution to the technical problem described above.

A further objective is to provide a pasta treatment line, in particular small and medium lines, which are more economical and competitive, by lowering the cost per kg of product, assimilating it with that of large potentiality lines.

These and other objectives according to the present invention are achieved by providing an integrated air flow apparatus and method as specified in the enclosed independent claims.

Further important characteristics and details of the present invention are object of the dependent claims.

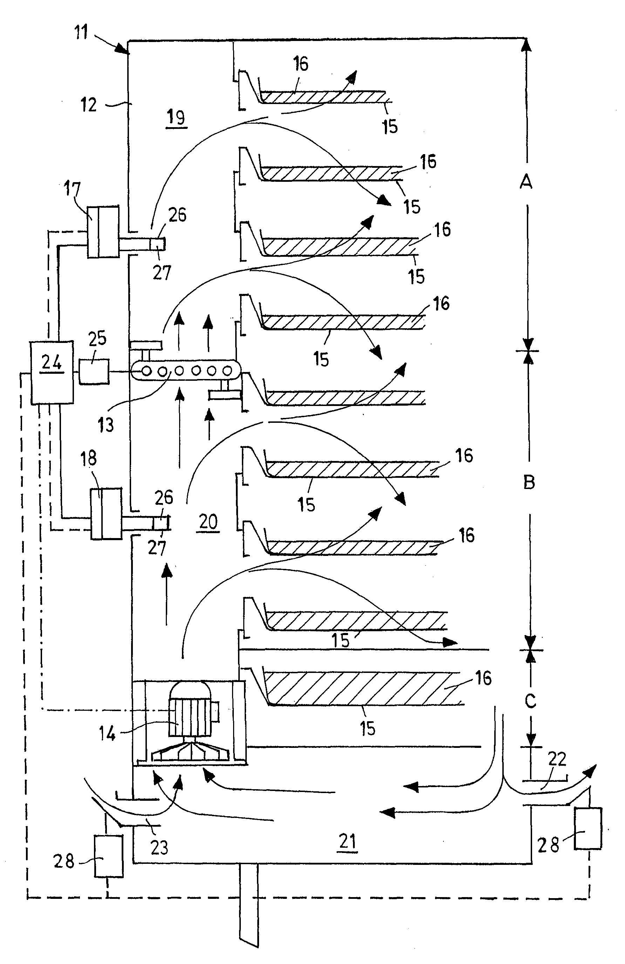

The characteristics and advantages of an integrated air flow drying apparatus and method according to the present invention will appear more evident from the following description, provided for illustrative and non-limiting purposes, referring to an embodiment illustrated in the enclosed figure which shows a schematic view of a drying apparatus which embodies the present invention.

With generic reference to the figure, this completely schematically illustrates a drying apparatus according to the present invention, in a non-limiting embodiment.

It should be noted that this drying apparatus, indicated as a whole with 11, comprises a single containment structure 12, in which the drying method of the present invention is effected.

Inside the drying apparatus 11, there are mainly three main treatment areas, i.e. a first drying or predrying area or section A, an actual drying area or section B and a stabilization area or section C connected with each other by a single and particular air circulation, as is better described hereunder.

Between the predrying section A and the actual drying section B there is at least one air-heating radiating battery 13. At least one fan 14 effects the air circulation inside the drying apparatus 11 between the layers 15 carrying quantities of pasta 16 to be treated.

A pair of control probes 17 and 18 of the air conditions are situated in a first embodiment shown in a section of duct 19 of the predrying area A and in a section of duct 20 of the actual drying area B, respectively.

In a section of the duct 21 upstream of the fan 14 and close to it, a damp air expulsion opening 22 and an external air inlet 23 are envisaged in the containment structure 12.

A processing group, schematized in 24, effects the control and activation according to a pre-selectable program of the pair of probes 17 and 18, the radiating battery 13 and fan 14, in relation to the type and quantity of pasta to be treated. The program is such that all the humidity of the pasta, managed according to requirements, is at the disposal of the whole drying cycle and is used to reach and manage temperatures and consequent diagrams typical for a treatment suitable for optimizing consumptions.

From the above description, it can therefore be seen that the two above-mentioned probes 17 and 18 which effect the regulation, are situated in the internal air flow, schematized by the various arrows, which contemporaneously refers to the predrying section A and the drying section B. The first probe 17 intervenes on the radiating battery 13, whereas the other probe 18 intervenes to control the conditions of the drying section, managing the subsequent emptying phase of the dryer.

It can be observed that the probes 17 and 18 both alternatingly control the radiating battery 13, by means of a valve 25, which is therefore the only heating group which is sufficient for the whole drying apparatus.

In practice, it is the probe 17, also called main probe, positioned in the predrying section A, which practically defines the characteristics of the air of the predrying section. Thanks to the pre-established quantity, which generates the passage rate of the product, this air acquires a variation in conditions which correspond to the requirements of the pasta being dried.

In this way, virtually all the humidity of the pasta is therefore available to the air for generating also extremely high temperature values, in spite of the very modest quantity of pasta (for example 600-700 kg/h).

In the non-limiting example illustrated, the conditions used in this embodiment can be suitable for traditional average formats of pasta, with the following values:
- predrying at 90° with relative humidity 45%
- drying at 80° with relative humidity 60%
- stabilization at 80° in static air, relative humidity around 75%
- drying time about 4 hours.

In a more general indication, according to the method of the present invention, the values can be indicated as:
- predrying at 80-90° with relative humidity 45-50%
- drying at 75-85° with relative humidity 60-65%
- stabilization at 78-82° in static air, relative humidity around 73-76%
- drying time about 3.5-4.5 hours.

This occurs when the main probe 17 is active and there is a continuous functioning for the quantities of pasta being treated.

The condition in which the probe 18 intervenes is now specified.

It has been said that the probe 17 initially controls the temperature and humidity values of the air suitable for treating the pasta arriving from the seed sieve (mentioned in the introduction relating to the known art) in the predrying section A, with about 25% of water.

With the entrance of the pasta 16, gradually introduced on the various layers 15 in the predrying section A, the humidity value and contextually the temperature value rapidly increase.

When the pasta 16, after about 45 minutes, passes to the subsequent drying section B, this is already filled with the air that has crossed the predrying section A with a residual temperature of about 80° and a humidity of approximately 60%.

These conditions are maintained by the intervention of the probe 17 due to the combined action of the thermostat 26 for the heat and the humidistat 27 which controls air exchange valves 28 to maintain the correct humidity value inside the apparatus 11.

These conditions remain constant during the whole regular production cycle or stoppage for changing the format of the pasta.

When, on the other hand, the production is interrupted and the predrying section A is emptied of the pasta being treated, the air control passes from the probe 17, above the radiating battery 13, to the underlying probe 18.

In this case, the probe 18 has established the temperature and humidity values suitable for the drying section B and, when the pasta leaves the layers 15 of the predrying section A, the dominating probe which will manage the quantity of heat transferred from the battery, automatically becomes the probe 18. Also in this case, the correct conditions are maintained by the intervention of the probe 18 due to the combined action of the thermostat 26 for the heat, and humidistat 27 which controls air exchange valves 28 for maintaining the correct humidity value inside even only a portion of the apparatus 11.

In this way, the pasta 16, during its drying cycle will receive suitable drying conditions for its state, in a sole environment, with a single air flow and only one heating battery 13.

This results in an extremely easy management, lower consumptions, a less structured line and last but not least a lower cost per kg/product with respect to the current market cost especially for small and medium production lines.

Through the present invention, the objective is achieved of making small lines more economical and competitive, which today have a much higher cost per kg of product with respect to large potentiality lines.

It should be noted that the invention can be applied thanks to the positioning of the at least one radiating heating battery 13 in a particular position of the dryer arranged in a single air flow between the predrying section A and the drying section B, separating an entry duct of air into the above-mentioned duct section 19 of the predrying area A and duct section 20 of the actual drying area B.

In this way, the characteristics of the air can be well adapted to the above requirements using a single air flow.

It can be seen how this single flow, controlled by the specific probes, changes characteristics during its passage adapting them to the evaporation necessity of the pasta.

The originality of this method lies in the capability and possibility of determining at what rate the air must pass over the product to have a suitable drying value, knowing the corrected value for the predrying.

A formula thus combined ensures in a simple and rational way the correction condition for each of the phases with the enormous advantage of having all the humidity of the pasta available, thus being able to check extremely high temperatures, also with small productions, with all the resulting advantages.

The figure also illustrates how the stabilization phase is effected in a stabilization section C in a hot humid and static environment. The air flow reaches this section only marginally and laterally and in this way the residual humidity in the pasta remains and is stabilized, thus creating equilibrium conditions with respect to both temperature and humidity, according to requirements.

It can thus be seen that an integrated air flow and energy saving apparatus and method according to the present invention achieve the objectives specified above.

The integrated air flow apparatus and method according to the present invention thus conceived is susceptible to numerous modifications and variants, all included in the same invention.

Furthermore, in practice, the materials used, as also the dimensions and components, can vary according to technical demands.

## Claims

1. An integrated air flow drying apparatus for pasta of the type comprising a predrying section (A), an actual drying section (B) and a stabilization section (C), arranged in a single containment structure (12) connected to each other by single air circulation, effected by at least one fan (14), at least one radiating battery (13) situated in an air feeding duct (19, 20) between said predrying section (A) and said actual drying section (B) and at least one control probe (17, 18) of the air conditions associated with said predrying section (A).

2. The drying apparatus according to claim 1, **characterized in that** said at least one control probe (17) of the air conditions, associated with said predrying area (A), is situated between a section of air feeding duct (19) positioned downstream of said at least one radiating battery (13).

3. The drying apparatus according to claim 1, **characterized in that** it includes at least a second probe (18) for controlling the air conditions associated with said actual drying section (B).

4. The drying apparatus according to claim 3, **characterized in that** said at least a second probe (18) for controlling the air conditions associated with said actual drying section (B), is positioned in a section of the air feeding duct (20) situated upstream of said at least one radiating battery (13).

5. The drying apparatus according to claim 3, **characterized in that** said at least a second probe (18) for controlling the air conditions enters into action when said at least one first probe (17) is disengaged due to the fact that there is an absence of pasta for treatment in said predrying section (A).

6. The drying apparatus according to claim 1, **characterized in that** said containment structure (12) comprises an expulsion opening (22) for humid air and an inlet (23) for external air.

7. An integrated air flow and energy saving drying method for pasta in a dryer comprising a predrying section (A), an actual drying section (B) and a stabilization section (C), situated in a single containment structure (12), **characterized in that** said sections (A, B, C) are connected to each other by a single air circulation, effected by at least one fan (14), the heating is obtained by at least one radiating battery (13) situated in an air feeding duct (19, 20) between said predrying section (A) and said actual drying section (B) and at least the air conditions associated with said predrying section (A) are revealed by at least one main control probe (17).

8. The drying method according to claim 7, **characterized in that** a predrying phase is effected in said predrying section (A) at 80-90° with a relative humidity of 45-50%, together with a drying phase in said drying section (B) at 75-85° with a relative humidity of 60-65%, and finally a stabilization phase in said stabilization section (C) at 78-82° in static air, with a relative humidity of about 73-76% with a total drying time of about 3.5-4.5 hours.

9. The drying method according to claim 8, **characterized in that** a predrying phase is carried out in said predrying section (A) at 90° with a relative humidity of 45%, together with a drying phase in said drying section (B) at 80° with a relative humidity of 60%, and finally a stabilization phase in said stabilization section (C) at 80° in static air, with a relative humidity of about 75% with a total drying time of about 4 hours.

10. The drying method according to claim 7, **characterized in that** at least the air conditions associated with said drying section (B) are revealed by means of at least a second control probe (18), when said at least first probe (17) is deactivated.
